# EUROPEAN PATENT APPLICATION

(11) **EP 4 174 737 A1**
(43) Date of publication of application: **03.05.2023**
(21) Application number: 22203488.6
(22) Date of filing: 25.10.2022
(51) Int. Cl.: G06N 20/00, G06F 40/30

(54) **APPARATUS AND METHOD FOR FINDING MEANINGFUL PATTERNS IN LARGE DATASETS USING MACHINE LEARNING**

(30) Priority: 27.10.2021 US 202117512155
(71) Applicant: Genetec Inc., Montréal, QC H4S 2A4 (CA)
(72) Inventor: KIMBER, Helen, Brighton, BN2 9NW (GB); LAWLOR, Sean, Québec, H9A 1Z4 (CA); SEGUIN, François, Montréal, Québec, H4S 2A4 (CA)
(74) Representative: Plasseraud IP

(57) **Abstract**

A method, and corresponding system and computer program product, is provided for identifying meaningful information in connection with an investigation. The method comprises processing a dataset using a machine learning process to derive an initial model conveying first statistical significance information corresponding to features in the dataset. The method also comprises deriving an alternate model at least in part by processing the dataset using the machine learning process while nullifying a contribution of certain features in the dataset selected as candidates for nullification. The alternate model conveys second statistical significance information corresponding to features in the dataset. A user interface is rendered on the display and presents information for assisting the user in identifying the information in the dataset meaningful to the investigation, the information presented being derived at least in part by processing information conveyed by the initial model and the alternate model.

## Description

### TECHNICAL FIELD

This disclosure generally relates to the field of data analysis and, more particularly to the use of machine learning to analyse large datasets to identify meaningful patterns therein. The techniques presented can be applied to various practical fields in which large amounts of data need to be reviewed and analysed in order to identify potentially meaningful patterns and/or to make predictions. Examples of such fields include, without being limited to, police investigations to identify crime/forensics patterns, economic data to identify/forecast to identify criteria that may affect certain social/economic outcomes, medical records and many others.

### BACKGROUND

In many fields, large amounts of data are commonly collected, either through forms with structured fields (e.g. pre-established) and/or in unstructured form (e.g. free form text), and stored for future reference and various purposes. While historically, such information would have been collected in written form (on paper), the great majority of information today is collected in an electronic format and stored in electronic databases that may be accessed from various locations using suitable computer equipment and network connections. While storing the data in electronic form in such databases greatly facilitates access and storage, the quantity of data is often prohibitively large and requires significant time and energy from people who must read through the documents in order to identify and locate useful information and patterns when performing an investigation. While manual classification and keyword searching can assist to a certain extent when searching for relevant information in the datasets, as the datasets get larger and unstructured, sorting through the datasets becomes increasingly lengthy and impractical.

As an example, consider police databases, which generally include a mixture of structured and unstructured data stored in various reports. Exploring the structured data such as dates, locations and crime type is one way to explore the data and find crimes that may be related. However, the information about the unique signature of crimes is generally stored as free written text referred to as the Modus Operandi (MO). Typically, analysts/investigators want to identify similar reports within and between multiple datasets to be able to locate patterns that will lead to clues for solving the crime. The idea is that similarities help police officers learn about broad patterns and trends to discover the evolution of crime as well as large scale organised crime patterns. Traditionally to do this, police analysts manually read and extract relevant information for later use. Such work is extremely time consuming and, to be practical, relevant information must often be predefined by a person. Unfortunately, performing this task manually presents significant limitations since, an analysist may fail to notice trends which appear over time.

Similar situations occur in other fields where large amounts of data, be it structured and/or unstructured, are generated. Fields of medicine, sociology and psychology are particularly interesting here, as these fields seek to understand and integrate complicated sets of data to finds patterns that will provide a better understanding and make predictions.

Increasingly, machine learning (ML) is being used to identify important factors in large datasets and for making predictions as to future events and/or to better understand common elements in connection with certain events. In the field of forensic investigations, machine learning tools are used to find patterns between crimes and to assist detectives and other investigators as they attempt to find clues to help them solve crimes. In the field of social economics, machine learning is sometimes used to analyse large datasets and look at what factors (or combination of factors) affect income in some populations and in what way. Such insights can be used, for example, to support some economic policies aimed at reducing income inequalities and/or improving access to education.

Various approaches have been contemplated in order to derive meaning from large datasets. One approach is described in Jentner, W. et al. (2018) 'Making machine intelligence less scary for criminal analysts: reflections on designing a visual comparative case analysis tool', Visual Computer, 34(9), pp. 1225-1241. doi: 10.1007/s00371-018-1483-0. The contents of this document are incorporated herein by reference. According to this approach, sequential pattern mining (SPM) is used to find common sequences of words across a set of documents. The documents are then clustered (grouped) according to the sequences found thereby allowing large bodies of texts to be grouped together based on similar phrases. While this work may provide some advantages and facilitate investigations by identifying high level patterns, more subtle details may be missed including statistically insignificant but operationally important information. Take the example of three police reports containing the phrases "smashed window", "broken window" and "open window". A human reading these reports would acknowledge that "smashed window" and "broken window" are semantically more similar to one another than "open window" and may want to mark these reports as related. MOs with "smashed window" and "broken window" show intend and possibly planning. On the other hand, "open window" may suggest a more opportunistic crime. However, using sequential pattern mining (SPM) these phrases are all considered different entities which contain the word "window".

One way for overcoming such shortcomings is to employ topic modelling techniques, one approach of which is Latent Dirichlet Allocation (LDA). LDA is described in Blei, D. M., Ng, A. Y. and Jordan, M. I. (2003) 'Latent Dirichlet allocation', Journal of Machine Learning Research, 3(4-5), pp. 993-1022. doi: 10.1016/b978-0-12-411519-4.00006-9. The contents of this document are incorporated herein by reference. Broadly stated in LDA, all the documents in a collection are considered to share the same set of topics but each document exhibits those topics in different proportions. In the same way, all the topics share the same words, but each topic exhibits these words in different proportions. The importance of each word in a topic defines the topic's subject. Knowing the distribution of topics for a document allows one to situate the documents in the context of the collection of documents. Returning to the phrases "smashed window", "broken window" and "open window". It is theoretically possible for LDA to observe these three phrases co-occurring with other words in the documents. If these co-occurring words are sufficiently different in the three documents LDA will assign different topic contributions to each document and so the similarity or dissimilarity between these documents could be determined without needing to have knowledge of these co-occurring words.

Research carried out at the University of Leeds has previously applied LDA to the context of police investigations to process MOs. Results of such research is summarized in Birks, D., Coleman, A. and Jackson, D. (2020) 'Unsupervised identification of crime problems from police free-text data', Crime Science. Springer Berlin Heidelberg, 9(1), pp. 1-19. doi: 10.1186/s40163-020-00127-4. The contents of this document are incorporated herein by reference. Birks et al. applied LDA to residential burglaries in a major metropolitan area of the UK. With this approach, a user can inspect the topics which are defined by a limited number of important words to each topic (seven in the example described). The documents are then grouped according to the most dominant topic. The documents are therefore hard assigned to these topics/categories, each of which can contain hundreds of documents, still an extremely large set of documents to read manually. While this approach also provides some insights when analysing broad trends, it remains ill suited when statistically less significant (or insignificant) but operationally important information needs to be taken into account in an investigation.

In view of the above, a deficiency associated with many commonly used machine learning approaches applied to large datasets is that the weights learnt in the training process tend to reflect the most statistically significant variables. While this provides the end user with some predictive power, it fails to provide suitable mechanisms for taking into account statistically less significant (or insignificant) but operationally important information that may need to be taken into account during an investigation.

Against the background described above, it is clear that there remains a need in the industry to provide improved processes and devices using machine learning for processing large datasets to assist investigators in identifying meaningful trends and gain insights based on information in these datasets that alleviate at least some of the deficiencies of the existing devices and methods.

### SUMMARY

This Summary is provided to introduce a selection of concepts in a simplified form that are further described below in the Detailed Description. This Summary is not intended to identify all key aspects and/or essential aspects of the claimed subject matter.

An approach proposed in the present document is directed at a process and associated apparatus for assisting a user in identifying in a dataset information meaningful to an investigation.

In one general approach, an objective is to identify features within a dataset that initially appear to be statistically insignificant but which in fact provide useful insights into an investigation. The inventors have noted that, in a wide variety of large datasets, there are often several features which are correlated with one another. When machine learning (ML) algorithms are applied to such datasets the statistical significance attributed to features in the training process will tend to reflect the most statistically significant features. Take the example of three police reports containing the phrases "smashed window", "broken window" and "open window". A human reading these reports would acknowledge that "smashed window" and "broken window" are semantically similar and may want to mark these reports as related as both show intent and possibly planning. On the other hand, "open window" may represent a more opportunistic crime. However, applying a machine learning (ML) algorithm using sequential pattern mining these phrases are all considered different entities which contain the term "window". Whilst this provides the end user with some predictive power, it may be unclear why certain features are important and other useful features may be overshadowed by the most important.

An approach proposed by the present disclosure, and which the inventors have dubbed *"small factor analysis",* is to allow a user to interact with the machine learning process to discover overshadowed, statistically insignificant (or less significant) features, and indirectly learn more about the statistically significant features. This may be achieved in part by first applying a machine learning process to a dataset to derive an initial model conveying first statistical significance information corresponding to features in the dataset. A subset of features is then selected from the features of the dataset assigned a higher level of statistical significance (and thus potentially considered statistically more important features in the initial model) than other features in the dataset. The selection may be performed either automatically based on some criteria and/or by the user. Following this selection, the machine learning process is re-optimized after nullifying a contribution of the subset of features (the subset of features being selected amongst the statistically more important features in the initial model) to derive an alternate mode conveying second statistical significance information. This counter-intuitive approach of nullifying a contribution of statistically more important features and re-optimizing the machine learning process on that basis provides an unexpected benefit of allowing the alternate model derived by to bring to light other, previously less significant, features that were overshadowed by more important features in the initial model. In the example above, the term "window" may be selected and nullified when re-optimizing the machine learning process bringing to light terms such as "broken", "smashed" and "open".

Information/insights derived using the above process may be presented in different manner to the user. For example, a user interface may be rendered on a display to present conveying (i) a first set of features in the dataset classified as statistically significant based at in part on the first statistical significance information conveyed by the initial model; and (ii) a second set of features in the dataset classified as statistically significant based at least in part on the second statistical significance information conveyed by the alternate model. The number of features in the first and second sets may vary however it is to be appreciated that the number of features presented needs to be reasonable so as to allow a user to be able to view and gain some insights from the data. Typically, the number of features in each set would be less than 15 and preferably less than 10 although more or fewer features may also be contemplated in alternate embodiments. By viewing the two sets of features concurrently on a display, and seeing how they differ, a user can gain some insights into the dataset that may assist in a current investigation.

In another example, which may be used in combination with the example above or as an alternative, the user interface rendered may present information derived by performing a comparison between the initial model and the alternate model. For example, the information presented may identify a set of features in the dataset presenting a greater change in statistical significance between the initial model and the alternate model relative to other features in the dataset. Accordingly, the method may comprise comparing the initial model and the alternate model to rank features in the dataset at least in part based on changes in statistical significance of the features between the initial model and the alternate model. Features assigned a ranking conveying a greater change in significance than other features may be selected and presented to the user as part of the information in the dataset meaningful to the investigation. In some cases, features having shown a greater change in significance tend to be proxies for the features that have been nullified and help a user gain insights related to the nullified features.

In accordance with a first aspect, this disclosure relates to a method for assisting a user in identifying in a dataset information meaningful to an investigation, the method being implemented by a computer system including one or more processors in communication with a memory module storing the dataset and with a display device. The method comprises:
a. using the one or more processors, processing the dataset using a machine learning process to derive an initial model conveying first statistical significance information corresponding to features in the dataset;
b. using the one or more processors, deriving an alternate model at least in part by processing the dataset using the machine learning process, wherein deriving the alternate model includes nullifying a contribution of a set of features in the dataset selected as candidates for nullification when applying the machine learning process, the set of features selected as candidates for nullification including a subset of the features in the dataset, wherein the alternate model conveys second statistical significance information corresponding to features in the dataset, wherein the first statistical significance information is different from the second statistical significance information;
c. rendering on the display device a user interface presenting information for assisting the user in identifying the information in the dataset meaningful to the investigation, the information presented being derived at least in part by processing information conveyed by the initial model and the alternate model.

In specific practical implementations, different suitable types of machine learning processes may be used to generate the initial and alternate models, including, for example, topic modelling processes (e.g. Latent Dirichlet Allocation (LDA) process, LDA2Vec, Latent semantic analysis (LSA), hierarchical Latent Dirichlet Allocation (hLDA) and Non-negative matrix factorization (NMF or NNMF) and generalized linear modelling (GLM) process. In implementations where the machine learning process is a topic modelling process, the dataset includes a corpus and features in the dataset include terms and/or groups of terms from the corpus.

In specific practical implementations, the candidates for nullification may be selected from the features in the dataset in different manners. In some implementations, the selection is performed at least in part based on the first statistical significance information. For example, the method may comprise classifying some features of the dataset as statistically significant at least in part by processing the first statistical significance information conveyed by the initial model and selecting the candidates for nullification from the features of the dataset classified as statistically significant. Different types of classifications may be contemplated including: binary (Boolean) classification where features may be classified as either being statistically significant or being not statistically significant; and multi-level classifications wherein features may be classified according to different levels of significance (e.g. a three-level classification may look like: High significance, Medium significance, Low significance). It is to be appreciated that any suitable number of significance levels may be used in alternate implementations. The candidates for nullification may thus be selected from the features of the dataset on the basis of their classification. The candidates for nullification are those features that have been selected, automatically and/or by the user, to have their contribution nullified when deriving the alternate model.

Advantageously, nullifying a contribution of a feature having a high statistical significance when deriving the alternate model and then comparing the impact of such nullification by looking at the initial and alternate models may provide useful insights into the dataset when seeking to identify information meaningful to the investigation,

In specific practical implementations, the candidates for nullification may be selected at least in part based on inputs provided by the user to the computer system and/or at least in part using automated computer implemented processes.

In a first example, selecting the candidates for nullification from the features in the dataset is performed at least in part by presenting one or more features of the dataset as suggested user selectable as options for nullification on the user interface. In response to receipt of a user selection of one or more features from the suggested user-selectable options, including the user selection as part of the selected candidates for nullification prior to applying the machine learning process to derive the alternate model. The suggested user-selectable options for nullification may be derived, for example, by processing the first statistical significance information using an automated process to derive one or more features in the dataset to be presented on the user interface as part of the suggested user-selectable options for nullification. An optimization scheme, such as a hill climbing (trial and error) process, and/or a set of heuristics rules may be applied to derive the one ore more features presented as user-selectable options for nullification.

In a second example, selecting the candidates for nullification from the features in the dataset is performed using an automated process to select one ore more features from the dataset to be part of the candidates for nullification absent user intervention. The automated process includes processing the first statistical significance information. An optimization scheme, such as a hill climbing (trial and error) process, and/or a set of heuristics rules may be applied to derive the one ore more features presented as user-selectable options for nullification.

In specific practical implementations, the information presented for assisting the user in identifying the information in the dataset meaningful to the investigation may convey different types of information in different ways.

In a first specific example of implementation, the information presented for assisting the user in identifying the information in the dataset meaningful to the investigation may convey (i) a first set of features in the dataset classified as statistically significant based at least in part on the first statistical significance information conveyed by the initial model; and (ii) a second set of features in the dataset classified as statistically significant based at least in part on the second statistical significance information conveyed by the alternate model.

In a second specific example of implementation, the information presented for assisting the user in identifying the information in the dataset meaningful to the investigation conveys information derived by performing a comparison between the initial model and the alternate model. For example, the information presented may identify a set of features in the dataset presenting a greater change in statistical significance between the initial model and the alternate model relative to other features in the dataset. Accordingly, the method may comprise comparing the initial model and the alternate model to rank features in the dataset at least in part based on changes in statistical significance of the features between the initial model and the alternate model. Features assigned a ranking conveying a greater change in significance may be selected and presented to the user as part of the information in the dataset meaningful to the investigation.

In some specific practical implementations, and as mentioned above, the machine learning process may include a topic modelling process, such as for example a Latent Dirichlet Allocation (LDA) process. In such practical implementations, the machine learning process used to derive the initial model may include applying the topic modelling process to the dataset to derive information conveying (i) a set of topics identified in the dataset; and (ii) the first statistical significance information for features in the dataset, the first statistical significance information conveying a relevance of respective features in the dataset to each topic in the set of topics identified in the dataset.

In some implementations, the set of topics identified in the dataset may include a single topic and the information presented on the user interfaces for assisting the user in identifying the information in the dataset meaningful to the investigation may convey the topic identified in the database in association with at least a subset of features in the dataset, the subset of features in the dataset being derived at least in part by processing the first statistical significance information.

In other implementations, the set of topics identified in the dataset may include at least two topics. In some cases, the number of topics in the set of topics identified in the dataset may vary. For example, the method may comprise first selecting a number of topics to be included in the set of topics to be identified in the dataset and then applying the topic modelling process to the dataset to derive the information conveying the set of topics identified in the dataset. The selection may be performed using an automated process, which may be trial-and-error based, aiming to satisfy certain criteria. Alternatively, the number of topics to be identified may be selected at least in part based on a user input. In practical implementations of the method, the number of topics selected may be configured to lie within a certain specific range and the user may be presented with user selectable options in that range. In a specific implementation, the certain specific range is configured to be 9 or fewer topics, preferably between 5 and 9 and most preferably 7 topics. In a specific practical example of implementation, applying a topic modelling process to the dataset includes (i) presenting on the user interface one or more suggested user-selectable options for numbers of topics to be derived by the topic modelling process; and (ii) in response to receipt of a user selection identifying a specific number of topics amongst the suggested user-selectable options, applying the topic modelling process to the dataset on the basis of the specific number of topics.

In some specific practical implementations, processing the dataset using the machine learning process to derive the initial model may include applying at least one of a data-cleaning process and feature engineering process to the dataset to remove a contribution associated with features considered insignificant to the investigation. For example, in a practical implementation in which the machine learning process includes a topic modelling process, where the dataset includes a corpus and where features in the dataset include terms from the corpus, the set of insignificant features may include a set of common stop terms and a set of investigation specific stop terms. For example, a data cleaning process may be applied to the dataset to remove punctuation, to remove articles, to fix incomplete data and the like. Any suitable method known in the art for cleaning a dataset may be used in practical implementations.

With respect to a feature engineering process, this process may be applied to the dataset to modify original features and remove features considered insignificant given the nature of the dataset and/or the nature of the investigation. For example, in specific implementations in which the dataset includes a corpus comprised of police reports and features in the dataset are comprised of terms and/or groups of terms from the corpus, the feature engineering process may comprise removing features pertaining to standard police reports, for example terms shared by most of the reports in the corpus while providing little or no practical insights into a specific investigation. For example, terms such as "police report", "forensics", "investigation", "victim", "detective" and the like may be removed as these terms appear in the great majority of the of the corpus while providing little or no practical insights into a specific investigation. Any suitable method known in the art for performing feature engineering including identifying and removing such terms (or groups of terms) from the corpus may be used in practical implementations. In a specific practical implementation, the feature engineering process may include applying a process using a term frequency - inverse document frequency (TF-IDF) statistic to the dataset to identify at least some terms of the set of investigation specific stop terms to be removed from the corpus.

In some specific practical implementations, the alternate model is derived using the machine learning process by applying an optimization process to the initial model nullifying the contribution of the set of features in the dataset selected as candidates for nullification.

Practical implementations of the above method may be integrated into a wide variety of computer implemented tools for supporting investigations, including but without being limited to, police investigation, investigations in the field of medicine, financial investigations and/or investigations in the fields of sociology/psychology. Depending on the nature of the investigation, the dataset used in connection with the above-described method will vary. For example, for a police investigation, the dataset may include a plurality of police reports and may be further constrained to police reports pertaining to certain types of crimes related to a particular crime being investigated. As another example, for an investigation in the field of medicine, the dataset may include a plurality of medical reports and may be further constrained to medical reports pertaining to certain types of medical conditions related to a particular clinical condition being investigated. For example, if the medical condition pertains to the occurrence of caesarian, the medical report may be constraints to medical report pertaining to patient during delivery. As yet another example, for a financial investigation looking to predict future financial trends (for example), the dataset may include a plurality of financial reports and may be further constrained to financial reports pertaining to historical financial trends in certain economic sector related to a particular sector being investigated.

In accordance with another aspect, a method is provided for assisting a user in identifying in a dataset information meaningful to an investigation, the method being implemented by a computer system including one or more processors in communication with a memory module storing the dataset and with a display device. The method comprises:
a. using the one or more processors, processing the dataset using a machine learning process to derive an initial model;
b. rendering a user interface on the display device to present a set of suggested user-selectable features for nullification, the suggested user-selectable features corresponding to statistically important features conveyed by the initial model;
c. in response to receipt of a user selection of one or more features from the suggested user-selectable options, deriving an alternate model at least in part by processing the dataset using the machine learning process nullifying a contribution of the one or more features specified by the user selection;
d. adapting the user interface to present information for assisting the user in identifying the information in the dataset meaningful to the investigation, the information presented being derived at least in part by processing the initial model and the alternate model.

In some specific practical implementations, the information presented for assisting the user in identifying the information in the dataset meaningful to the investigation conveys information derived by performing a comparison between the initial model and the alternate model. For example, the information presented may identify a set of features in the dataset presenting a greater change in statistical significance between the initial model and the alternate model relative to other features in the dataset. Accordingly, the method may comprise comparing the initial model and the alternate model to rank features in the dataset at least in part based on changes in statistical significance of the features between the initial model and the alternate model. Features assigned a ranking conveying a greater change in significance may be selected and presented to the user as part of the information in the dataset meaningful to the investigation.

In some specific practical implementations, the alternate model is derived using the machine learning process by applying an optimization process to the initial model.

In specific practical implementations, different suitable types of machine learning processes may be used to generate the initial and alternate models, including, for example, topic modelling processes and generalized linear modelling (GLM) process. In implementations where the machine learning process is a topic modelling process, the dataset includes a corpus and features in the dataset include terms and/or groups of terms from the corpus.

In accordance with another broad aspect, a system is provided for assisting a user in identifying in a dataset information meaningful to an investigation, the system being in communication with a display device and including one or more processors in communication with a memory module storing the dataset, wherein the one or more processors are programmed for implementing the above-described method.

In accordance with another broad aspect, a computer program product is provided for assisting a user in identifying in a dataset information meaningful to an investigation, the computer program product including computer readable instructions stored on a non-transitory computer readable medium, wherein the computer readable instructions when executed by a system including one or more processors is configured for implementing the above-described method.

The above-described approach may be applied to a wide variety of practical applications to assist in identifying meaningful patterns in large volumes of data, including, without being limited to, police investigation, investigations in the field of medicine, financial investigations and/or investigations in the fields of sociology/psychology.

All features of exemplary embodiments which are described in this disclosure and are not mutually exclusive can be combined with one another. Elements of one embodiment or aspect can be utilized in the other embodiments/aspects without further mention. Other aspects and features of the present invention will become apparent to those ordinarily skilled in the art upon review of the following description of specific embodiments in conjunction with the accompanying Figures.

### BRIEF DESCRIPTION OF THE DRAWINGS

A detailed description of specific exemplary embodiments is provided herein below with reference to the accompanying drawings in which:
Fig. 1 is flow diagram of a method for assisting a user in identifying in a dataset information meaningful to an investigation using a machine learning process, the method including nullifying a contribution of one or more features in the dataset and rendering a user interface presenting information for assisting the user, in accordance with a specific example of implementation of the present invention;
Fig. 2 is a flow diagram of a method for selecting one or more features from a dataset as candidates for nullification, for use in connection of nullifying the contribution of the one or more features in the dataset shown in the method of Figure 1, in accordance with a specific example of implementation of the present invention;
Fig. 3 is a flow diagram of a method for deriving information to be presented on a user interface, for use in connection with rendering the user interface shown in the method of Figure 1, in accordance with a specific example of implementation of the present invention;
Fig. 4 is a schematic illustration of a system for implementing the method of Figure 1 in accordance with a specific example of implementation of the present invention;
Fig. 5 is flow diagram of a method for assisting a user in identifying in a dataset information meaningful to an investigation using a machine learning process including a topic modelling process in accordance with a specific example of implementation of the present invention;
Fig. 6 is a schematic illustration of an initial model, an alternate model and information meaningful to an investigation derived using the method of Figure 5 in accordance with a very specific example of implementation of the present invention;
Fig. 7 is a schematic illustration of a portion of the method of Fig. 5, showing a process for processing a dataset to derive initial and alternate models using a machine learning process including a Latent Dirichlet Allocation (LDA) process as a topic modelling process in accordance with a specific example of implementation of the present invention;
Fig. 8A and 8B are screen shots of a user interface that may be used in connection with the process of Figure 5 in accordance with a specific example of implementation of the present invention;
Fig. 9 is flow diagram of a method for assisting a user in identifying in a dataset information meaningful to an investigation using a machine learning process, the method including rendering a user interface presenting a set of statistically important features as suggested user-selectable features for nullification in accordance with another specific example of implementation of the present invention;
Fig. 10 is an example of a user interface window rendered on a display screen presenting suggested user-selectable features as candidates for nullification in accordance with a specific example of implementation of the present invention;
Fig. 11 is an example of a user interface window rendered on a display screen presenting information meaningful to an investigation that may be derived in accordance with specific examples of implementation of the present invention;

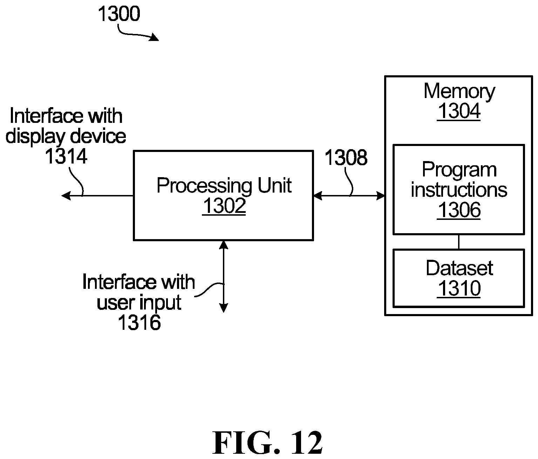

Fig. 12 is a schematic illustration of a computing device for implementing the method of Figure 1 in accordance with a specific example of implementation of the present invention
Fig. 13 is a schematic illustration of a distributed, client-sever, computer system for implementing the method of Figure 1 in accordance with another specific example of implementation of the present invention.

In the drawings, exemplary embodiments are illustrated by way of example. It is to be expressly understood that the description and drawings are only for the purpose of illustrating certain embodiments and are an aid for understanding. They are not intended to be a definition of the limits of the invention.

### DETAILED DESCRIPTION OF EMBODIMENTS

A detailed description of one or more specific embodiments of the invention is provided below along with accompanying Figures that illustrate principles of the invention. The invention is described in connection with such embodiments, but the invention is not limited to any specific embodiment. The scope of the invention is limited only by the claims. Numerous specific details are set forth in the following description in order to provide a thorough understanding of the invention. These details are provided for the purpose of describing non-limiting examples and the invention may be practiced according to the claims without some or all of these specific details. For the purpose of clarity, technical material that is known in the technical fields related to the invention has not been described in great detail so that the invention is not unnecessarily obscured. In addition, it is to be appreciated that tools embodying aspects of the invention may be integrated as part of a system for performing investigations that may include other tools providing other functionality including, for example, clustering, dimension reduction, hotspot visualization and other visualisation and analysis tools. For the purpose of simplicity, these tools have not been described in the present disclosure.

The approach described in the present document may be applied to providing insights and assisting users in identifying potentially meaningful patterns and/or to make predictions in a wide variety of investigations. In the description below, certain very specific practical implementations of the present invention will be presented in the context of a forensics applications in order to illustrate how the methods described can be used in a practical investigative context. It is to be appreciated that the concepts presented in the present document may be used in other practical applications in which it is desirable to identify meaningful patterns and trends to be able to make better predictions and(or) to solve a problem., including but without being limited to police investigations to identify crime/forensics patterns, economic investigations to identify/forecast to identify criteria that may affect certain social/economic outcomes, medical investigations and many others that may become apparent to the person skilled in the art in view of the present description.

### Process for assisting a user

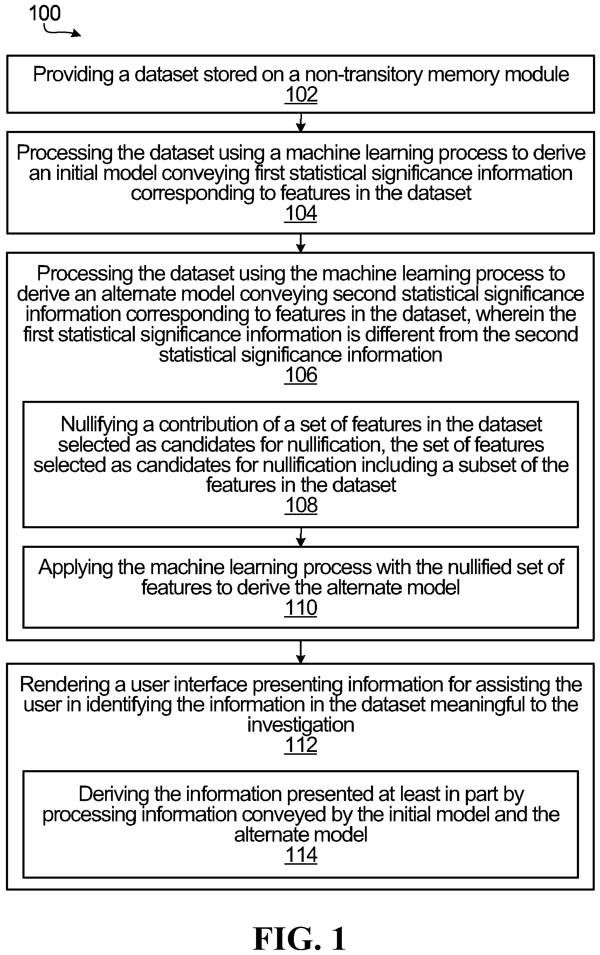

With reference to Figure 1, a method 100 for assisting a user in identifying in a dataset information meaningful to an investigation using a machine learning process in accordance with a specific example of implementation of the present invention will now be described.

The method 100 depicted in Figure 1 may be implemented by a computer system including one or more processors in communication with a non-transitory memory module and with a display device.

At step 102, a dataset stored on the non-transitory memory module is provided. The dataset constitutes a body of information based on which the investigation is to be performed. The dataset may include a wide range of data in different formats, including structured data (e.g. with pre-defined data fields, features, terms (e.g. words, word patterns, categories etc...)) as well as unstructured data (e.g. free-form reports). In some practical implementations, the dataset may be comprised of a plurality of documents forming a corpus of documents, wherein the documents are formed of terms (e.g. words, word patterns, categories etc..). The content of the dataset will vary according to the application for which it is intended and any suitable manner known in the art for constituting the dataset may be used in specific practical implementations. For example, in specific practical implementations:
a. for a police investigation aiming to identify crime/forensics patterns, the dataset (corpus of documents) may include a set of police reports pertaining to related crimes. For example if the investigation pertains to a homicide in a specific city, the corpus of document may comprise: (i) police reports for all homicides that occurred in that city (or group of cities) over a certain time period; (ii) police reports for all violent crimes that occurred in that city (or group of cities) over a certain time period; and/or (iii) police reports for all breaking and entering crimes that occurred in that city (or group of cities) over a certain time period.
b. for an economic investigation aiming to identify/forecast criteria that may affect certain social/economic outcomes, the dataset (corpus of documents) may include a set of reports summarizing social/economic outcomes in different urban and rural regions.
c. for a medical investigation aiming to identify risk factors for a specific medical condition, the dataset (corpus of documents) may include a set of medical reports pertaining to patients having been diagnosed with the specific medical condition.

At step 104, the dataset is processed using a machine learning process to derive an initial model conveying first statistical significance information corresponding to features in the dataset. Different types of machine learning processes/algorithms may be used in different implementations in order to derive this initial model.

In a first practical example, the machine learning process may include a generalized linear modelling (GLM) process to derive the initial model conveying first statistical significance information corresponding to features of the dataset.

In a second practical example in which the dataset is comprised of a plurality of documents forming a corpus of documents and where the features correspond to terms (e.g. words) in the corpus, the machine learning process may include a topic modelling process to derive the initial model conveying first statistical significance information corresponding to terms (e.g. words) of the documents. In this second practical example, any suitable type of topic modelling process may be used including, without being limited to Latent Dirichlet Allocation (LDA), LDA2Vec, Latent semantic analysis (LSA), hierarchical Latent Dirichlet Allocation (hLDA) and Non-negative matrix factorization (NMF or NNMF). A more detailed explanation of a practical implementation in which the machine learning process is a topic modelling process based on Latent Dirichlet Allocation (LDA) will be described later on in the present disclosure.

It is to be appreciated that the application of the machine learning process at step 104 may also include applying suitable data-cleaning and/or feature engineering processes to the dataset prior to applying a machine learning algorithm according to know methods to remove a contribution associated with features considered insignificant to the investigation. For example, where the dataset includes a corpus of documents and where features in the dataset include terms (e.g. words) from the corpus and where the machine learning process includes a topic modelling process, the set of insignificant features may include, for example, a set of common stop terms and/or a set of investigation specific stop terms. Common stop terms and/or a set of investigation specific stop terms may be identified in a number of different suitable manners known in the art including, for example but not limited to:
a. using a reference static dictionary including common stop terms and/or a set of investigation specific stop terms (e.g. articles, pronouns, certain specific nouns and verbs etc...); and/or
b. applying a process using a term frequency - inverse document frequency (TF-IDF) statistic to the dataset to identify common terms and/or a set of investigation specific stop terms.

Processes for performing data-cleaning and feature engineering are known in the art of machine learning and will therefore not be described in greater detail here.

Once the initial model conveying first statistical significance information corresponding to features in the dataset has been derived, the process proceeds to step 106.

At step 106, the dataset is processed using the same machine learning process as at step 104 in the order to derive an alternate model conveying second statistical significance information corresponding to features in the dataset. While the same machine learning process is used, the second statistical significance information is different from the first statistical significance information that was derived in connection with the initial model as a result of the nullification of the contribution of some features in the dataset.

In particular, step 106 for deriving the alternate model conveying the second statistical significance information includes, at step 108, nullifying a contribution of a set of features in the dataset selected from the dataset as candidates for nullification and then, at step 110, applying the machine learning process with the nullified set of features to derive the alternate model. The way the contribution of the specific set of features is nullified at step 108 depends on the nature of the process/algorithm applied by the machine learning process used and any suitable approach may be taken, including for example, eliminate from the dataset the features in the set of features, setting to "nil" weight factors associated to the features in the set of features et any other suitable approach.

In some implementations, the set of features of the dataset whose contribution is nullified is selected at part of step 108 from the features of the dataset assigned a higher level of statistical significance relative to other features in the initial model (and thus potentially considered statistically more important features in the initial model) than other features in the dataset.

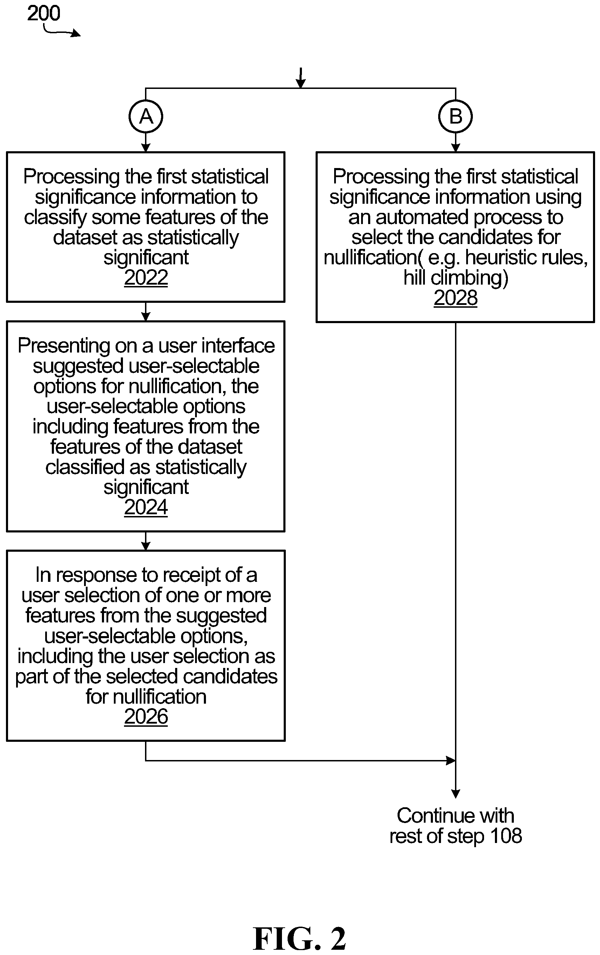

The selection of the features as candidates for nullification may be performed automatically (based on one or more specific criteria) and/or based on one or more user inputs. An example of a process part of step 108 for selecting features as candidates for nullification is shown in Figure 2.

As depicted, two options for selecting the features as candidates for nullification are provided namely path "A", which is the selection based on user input and comprises steps 2022 2022 and 2026, and path "B", which is an automated selection and comprises step 2028. In specific practical implementations, either path "A" or path "B" may be used or, alternatively both may be used in combination to select features that will be included as part of the candidates for nullification.

Looking first at the selection of the features as candidates for nullification based on one or more user inputs (path "A"), at step 2022, the first statistical significance information conveyed by the initial model is processed using an automated process to classify the features in the dataset based on their respective statistical significance. Different types of classification of features may be contemplated including: binary (Boolean) classification where features may be classified as either being statistically significant or being not statistically significant; and multi-level classification wherein features may be classified according to different levels of significance (e.g. a three-level classification may look like: High significance, Medium significance, Low significance). It is to be appreciated that any suitable number of significance levels may be used in alternate implementations. The candidates for nullification may thus be selected from the features of the dataset on the basis of their classification.

In some implementations, this may include, for example without being limited to:
a. assigning a Boolean classification to each feature in the dataset (whereby each feature classified as "being" or "not being" statistically significant/important). The classification may be performed based on different criteria including comparing the first statistical significance information against a threshold value and/or classifying only a specific limited number of features in the dataset as "being" statistically significant/important based on the first statistical significance information. The specific limited number of features classified as being statistically significant may vary between implementations and may include 1, 2, 3..., 8, 9, 10 or any other suitable number of features. In a non-limiting practical implementation, the specific limited number of features to be classified as statistically significant/important was set to 10; and
b. ranking the features in the dataset based on their respective statistical significance as conveyed the first statistical significance information. This approach is generalization of the previously described Boolean classification in which rather than having only two categories, a plurality of rankings is defined based on the first statistical significance information, each ranking having a threshold value and/or being assigned corresponding specific limited number of features.

At step 2024, suggested user-selectable options for nullification are presented to a user on a user interface displayed on a display device. The suggested user-selectable options include features from the features of the dataset classified as statistically significant at step 2022 and may be presented in the form of a list of individually selectable features. In some implementations, the suggested user-selectable options may include a single feature as an option for selection by the user. In other implementations, the suggested user-selectable options may include two or more features presented as options for selection.

The selection of which features to include as part of the suggested user-selectable options may be performed using an automated process configured to process the first statistical significance information to select one, two or more features from the dataset to be presented on the user interface as part of the suggested user-selectable options for nullification. Various processes may be contemplated in practical implementations and may include, without being limited to, processes configured for applying an optimization scheme and/or a hill climbing (trial and error) to select the one or more features from the dataset as well as processes configured to apply a set of heuristics rules to select one or more features from the dataset.

Specific examples of hill climbing (trial and error) processes that may be used include the use of a modified version of greedy backward elimination of features, where the optimization implemented by the automated process uses a metric pertaining to small factors emergence. For example, in the case of LDA, the process may include spotting a feature whose statistical significance has materially changed in an alternate model derived following the nullification of one ore more specific features (i.e. this feature is considered to be a "big mover" in terms of statistical significance)).

Specific examples of heuristics rules for selecting one or more features from the dataset that may be used include the use of a custom dictionary of frequently important terms built either using a rules approach (e.g. gang names), and/or by clustering the terms in the dataset based on semantic similarity or logic (e.g. to list words related to weapons, locations, etc.). On the basis of such a custom dictionary, heuristic rules may be devised for selecting features as candidates for nullification, for example by systematically selecting as candidates for nullification features pertaining to certain specific semantic and/or logical groupings defined by the custom dictionary and/or by automatically selecting as candidates for nullification features from the custom dictionary that, in the initial model derived, can be classified as being statistically significant based on the statistical significance information conveyed by the initial model.

Other suitable processes for deriving suggested user-selectable options of statistically important features as options for selection may be used in alternate implementations.

The user interface permits a user to select a subset of the features in the suggested user-selectable options, which may include 1 or more features, by providing corresponding user inputs. The user inputs may be provided using any suitable device including, without being limited to, a keyboard, mouse, touch-sensitive screen and audio/voice input.

Once the user has completed the selection of one or more features from the suggested user-selectable options at step 2024, the process proceeds to step 2026. At step 2026, in response to receipt of the user selections, the corresponding features are included as part of the selected candidates for nullification for use in step 108 (shown in Figure 1).

Looking now at the selection of the features as candidates for nullification based on an automated selection (path "B"), at step 2028, the first statistical significance information conveyed by the initial model is processed using an automated process to select features to form part of the selected candidates for nullification. The automated process used in specific implementations may be configured to process the first statistical significance information to select one, two or more features from the dataset to be included as part of the candidates for nullification. The number of candidates selected may be fixed or may vary and may be automatically determined based on one or more criteria. Alternatively, the number of candidates selected may be a configurable parameter selectable by the user. Various processes may be contemplated in practical implementations and may include, without being limited to, processes configured for applying an optimization scheme and/or a hill climbing (trial and error) and/or a set of heuristics rules, to select one ore more statistically important features from the dataset to be included as part of the candidates for nullification.

Specific examples of hill climbing (trial and error) processes that may be used include the use of a modified version of greedy backward elimination of features, where the optimization implemented by the automated process uses a metric pertaining to small factors emergence. For example, in the case of LDA, the process may include spotting a feature whose statistical significance has materially changed in an alternate model derived following the nullification of one ore more specific features (i.e. this feature is considered to be a "big mover" in terms of statistical significance)).

Specific examples of heuristics rules for selecting one or more features from the dataset that may be used include the use of a custom dictionary of frequently important terms built either using a rules approach (e.g. gang names), and/or by clustering the terms in the dataset based on semantic similarity or logic (e.g. to list words related to weapons, locations, etc.). On the basis of such a custom dictionary, heuristic rules may be devised for selecting features as candidates for nullification, for example by systematically selecting as candidates for nullification features pertaining to certain specific semantic and/or logical groupings defined by the custom dictionary and/or by automatically selecting as candidates for nullification features from the custom dictionary that, in the initial model derived, can be classified as being statistically significant based on the statistical significance information conveyed by the initial model.

Following steps 2028 and/or 2026, we continue step 108 shown in Figure 1, in which a contribution of the set of features in the dataset selected from the dataset as candidates for nullification are nullified.

At step 110, the machine learning process is applied with the nullified set of features to derive the alternate model. In some specific implementations, rather than applying the machine learning process *"de novo"* to the dataset with the set of nullified features to generate the alternate model, a machine learning re-optimization process may be applied to the initial model derived at step 104 while nullifying the contribution of the set of features selected as candidates for nullification in the dataset. Applying machine learning re-optimization may provide some advantages including lower computational requirements for generating the alternate model compared to the initial model and permitting a convergence of the alternate model that is closer to the maxima of the initial model and reducing the likelihood that the initial model and the alternate model will reside in two different local optima.

This counter-intuitive approach at step 106 of nullifying a contribution of statistically more important features and re-optimizing the machine learning process based on the initial model to derive the alternate model provides an unexpected benefit of allowing the alternate model to bring to light previously less statistically significant features that may have been overshadowed by more important features in the initial model.

Following completion of step 106 and once the initial and alternate models are obtained, at step 112, a user interface is rendered on a display screen presenting information for assisting the user in identifying the information in the dataset meaningful to the investigation. More specifically, at step 114, the first statistical significance information and the second statistical significance information conveyed by the initial and alternate models are processed to derive the information to be presented on the user interface. The inventors have noted that by considering differences/variations between the first and second statistical significance information resulting from the manipulations of some features in the dataset (in this example by the nullification of the contribution of some features in the dataset), some insights into patterns and/or trends in the dataset can be obtained.

The information presented to the user may take different suitable forms in different implementations.

In a first example, the information presented for assisting the user in identifying the information in the dataset meaningful to the investigation may convey a first set of features in the dataset classified as statistically significant based at least in part on the first statistical significance information; and a second set of features in the dataset classified as statistically significant based at least in part on the second statistical significance information. By presenting both sets of features concurrently on the interface, the user may view and ascertain differences/variations, which may help in identifying meaningful information, including in some cases trends and/or patterns.

In a second example, the information presented for assisting the user in identifying the information in the dataset meaningful to the investigation may convey information derived by performing a comparison between the initial model and the alternate model. Such a comparison may take on various forms in practical implementations.

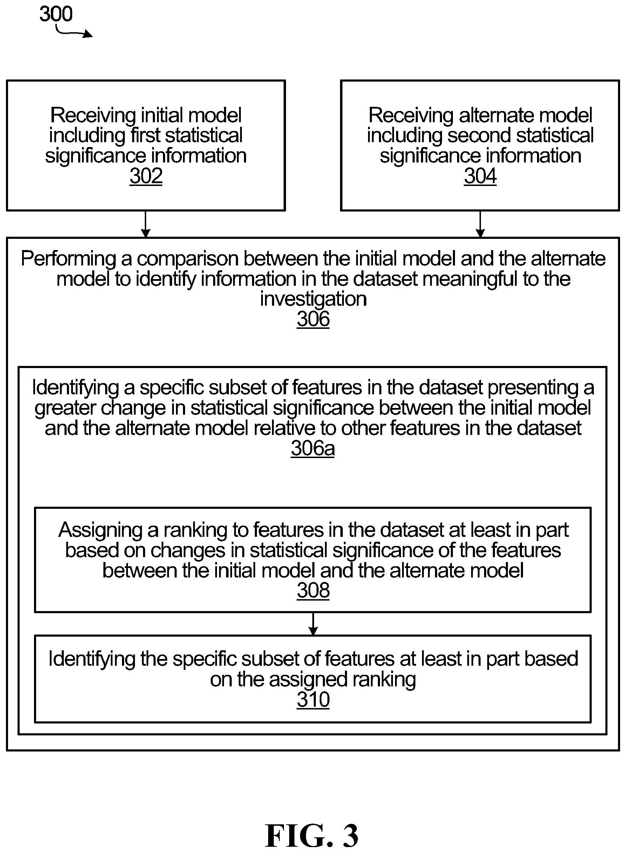

A specific example of a process for deriving information to be presented for assisting the user in identifying the information in the dataset meaningful to the investigation by performing a comparison between the initial model and the alternate model is shown in Figure 3.

As depicted at step 302, the initial model derived at step 104 (shown in Figure 1) including first statistical significance information is received and at step 304, the alternate model derived at step 106 (shown in Figure 1) including second statistical significance information is received.

Following this, at step 306, a comparison between the initial model and the alternate model is performed to identify information in the dataset meaningful to the investigation. Different suitable approaches may be used for comparing the initial and alternate models is practical implementations. In the example depicted, the comparison performed includes step 306a which aims to identify a specific subset of features in the dataset presenting a greater change in statistical significance between the initial model and the alternate model relative to other features in the dataset. In this embodiment, this comparison aims to identify the features whose statistical significance was most affected because of the nullification of the set of features used to derive the alternate model in order to draw the user's attention to these features.

In a specific practical implementation, Step 306a to identify a specific subset of features in the dataset presenting a greater change in statistical significance than other terms, includes at step 308 for comparing the initial model and the alternate model and assigning a ranking to features in the dataset at least in part based on changes in statistical significance of the features between the initial model and the alternate model. Following this, at step 310, the rankings are used to identify the specific subset of features in the dataset presenting a greater change than other features. The identification of the features may be performed based on different criteria including comparing the variation between the first and second statistical significance against a threshold value and/or identifying a specific number of features in the dataset as being the ones that presented the greatest change. In practical implementation, the specific number of features identified as presenting the greatest change may be a fixed number of features or may be an operational parameter selectable by the user by providing an input through a user interface.

It is to be appreciated that the information derived by performing a comparison between the initial model and the alternate model may be presented to the user alone or together with other information including, but not limited to information conveying:
i. the first set of features in the dataset classified as statistically significant based at in part on the first statistical significance information; and
ii. the second set of features in the dataset classified as statistically significant based at least in part on the second statistical significance information.

The user interface may present the information pertaining to the initial model, the alternate model and the information derived by comparing both models in a variety of different suitable manners. For example, a graphical representation may be presented to show similarity and dynamic graphical displays to visually convey changes between the initial and the alternate models may be contemplated. Specific details pertaining to such graphical display approaches are beyond the scope of the present application and as such will not be described in greater specificity in the present document.

### System for assisting a user

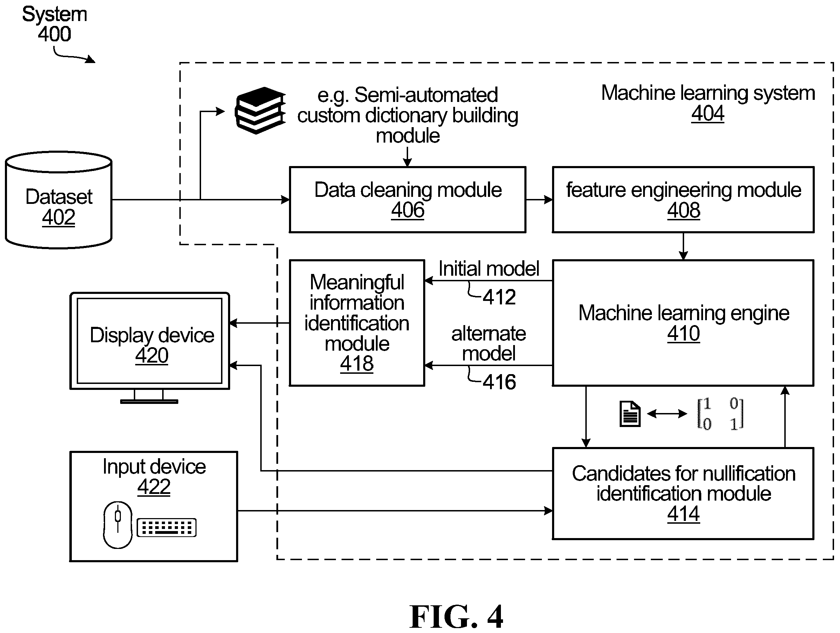

With reference to Figure 4, a functional illustration of a system for implementing the method of Figure 1 in accordance with a specific example of implementation of the present invention will now be described.

As depicted, the system 400 comprises a memory module 402 storing a dataset based on which the investigation is being performed. In a very specific example, the system 400 may be used for performing police investigations and the dataset may be comprised of a corpus of documents including police reports. It is to be appreciated that while the memory module 402 has been depicted as a single entity storing all the dataset, in practical application such memory module 402 may be comprised of one or more memory storage devices which may be co-located or, alternatively, distributed over a network in communication with other components of the system 400.

The system 400 also comprises a display device 420 on which a user interface is rendered for presenting information for assisting the user in identifying the information in the dataset meaningful to the investigation. Optionally the user interface may also be used for presenting user-selectable options to the user, including for example suggested features to be included as part of the candidates for nullification in the process described above with reference to Figures 1 and 2. The display device 420 may be embodied in different types of device including, without being limited to, a computer display screen, a tablet, a smartphone or any other suitable type of display device.

The system 400 also comprises one ore more user input devices 422 for allowing a user of the system to provide user commands, user selections and to allow a user (together with the display device 420) otherwise interact with the machine learning system 404 when conducting an investigation. The one or more input devices 422 may include various types of suitable input devices including for example, but without being limited to, a keyboard, mouse, touch-sensitive screen and audio/voice input.

The system 400 also comprises a machine learning system 404 in communication with the memory module 402, the user input device(s) 422 and the display device 420. The machine learning system 404 is configured to process the dataset stored in memory module 402 according to steps 104 106 and 112 (described above with reference to Figure 1) to derive and present information on the display device 420 for assisting a user in identifying in the dataset information meaningful to an investigation. In some implementations, machine learning system 404 is also configured to take into account user inputs provided trough the user input device(s) 422.

In the embodiment depicted, the machine learning system 404 includes various functional modules for implementing various aspects of the method depicted in Figure 1. In the embodiment shown, the machine learning system 404 includes a data cleaning module 406, a feature engineering module 408, a machine learning engine 410, a "candidates for nullification" identification module 414 and a meaningful information identification module 418.

The data cleaning module 406 and the feature engineering module 408 are configured to receive and process features in the dataset 402 before processing by the machine learning engine 410 to eliminate information unlikely to be relevant to the investigation.

For example, a data cleaning process implemented by the data cleaning module 406 may be applied to the dataset to remove punctuation, to remove articles, to fix incomplete data and the like. Any suitable method known in the art for cleaning a dataset may be used in practical implementations of the cleaning module 406.

With respect to a feature engineering process implemented by the feature engineering module 408, this process may be applied to the dataset 402 to modify original features and/or remove original features considered insignificant given the nature of the dataset and/or the nature of the investigation. For example, in specific implementations in which the dataset 402 includes a corpus comprised of police reports and features in the dataset include terms and/or groups of terms from the corpus, the feature engineering process implemented by the feature engineering module 408 may comprise removing features pertaining to standard police reports, for example terms shared by most of the reports in the corpus while providing little or no practical insights into a specific investigation. For example, terms such as "police report", "forensics", "investigation", "victim", "detective" and the like may be removed as these terms appear in the great majority of the corpus while providing little or no practical insights into a specific investigation. Any suitable method known in the art for performing feature engineering including identifying and removing such terms (or groups of terms) from the corpus may be used in practical implementations of the feature engineering module 408. In a specific practical implementation, the feature engineering process may include applying a process using a term frequency - inverse document frequency (TF-IDF) statistic to the dataset to identify at least some terms of the set of investigation specific stop terms to be removed from the corpus.

The machine learning engine 410 implements a suitable machine learning process that may be applied to a dataset for generating a model conveying statistical significance information corresponding to features in the dataset. The specific process applied by the machine learning engine 410 may vary between practical implementations. Specific example of processes that may be contemplated include, without being limited to, various topic modelling processes (e.g. Latent Dirichlet Allocation (LDA), LDA2Vec, Latent semantic analysis (LSA), hierarchical Latent Dirichlet Allocation (hLDA) and Non-negative matrix factorization (NMF or NNMF) and generalized linear modelling (GLM) processes.

With reference to the machine learning system 404 shown in Figure 4 and to the process depicted in Figure 1, the machine learning engine 410 is configured to be used in at least two specific instances:
i. to process the dataset 402 (following processing by the data cleaning module 406 and the feature engineering module 408 to eliminate information unlikely to be relevant to the investigation) in order to derive an initial model conveying first statistical significance information corresponding to features in the dataset 402 in accordance with step 104 of Figure 1. The initial model derived by the machine learning system 404 is provided to the "candidates for nullification" identification module 414 and the meaningful information identification module 418.
ii. to process the dataset 402 in accordance with step 106 of Figure 1 to derive an alternate model conveying second statistical significance information corresponding to features in the dataset 402. In a specific implementation, the machine learning engine 410 is configured to receive a set of features in the dataset selected as candidates for nullification from the "candidates for nullification" identification module 414. The machine learning engine 410 is also configured to derive the alternate model by applying a re-optimization process to the initial model while nullifying the contribution of the set of features selected as candidates for nullification in the dataset. The alternate model derived by the machine learning system 404 is released and provided to the meaningful information identification module 418.

The "candidates for nullification" identification module 414 is configured to select a subset of features as candidates for nullification from the features of the dataset 402 and provide this subset to the machine learning engine 410. In a specific implementation, the subset of features selected corresponds to features assigned a higher level of statistical significance in the initial model (and thus potentially considered statistically more important features in the initial model). The module 414 receives the initial model conveying first statistical significance information from the machine learning engine 410 and processes this initial model to derive candidates for the subset. Optionally, for practical implementations allowing the user of the system 400 to influence the selection of the candidates for nullification, the module 414 may be in communication: (i) with the display device 402 to present suggested user-selectable options; and (ii) with the one or more user input device 422 for receiving user selections of one or more features for nullification. In this regard, in some specific examples of implementation, the module 414 may implement a process of the type described above with reference to Figure 2.

The meaningful information identification module 418 is configured to process the initial model 412 and the alternative model 416 received from the machine learning engine 410 in order to render a user interface on the display device 420 presenting information for assisting the user in identifying the information in the dataset 402 meaningful to the investigation. In some specific practical implementations, the meaningful information identification module 418 implementations the process shown in Figure 3 and described earlier in the present document.

### Topic Modelling and Latent Dirichlet Allocation (LDA)

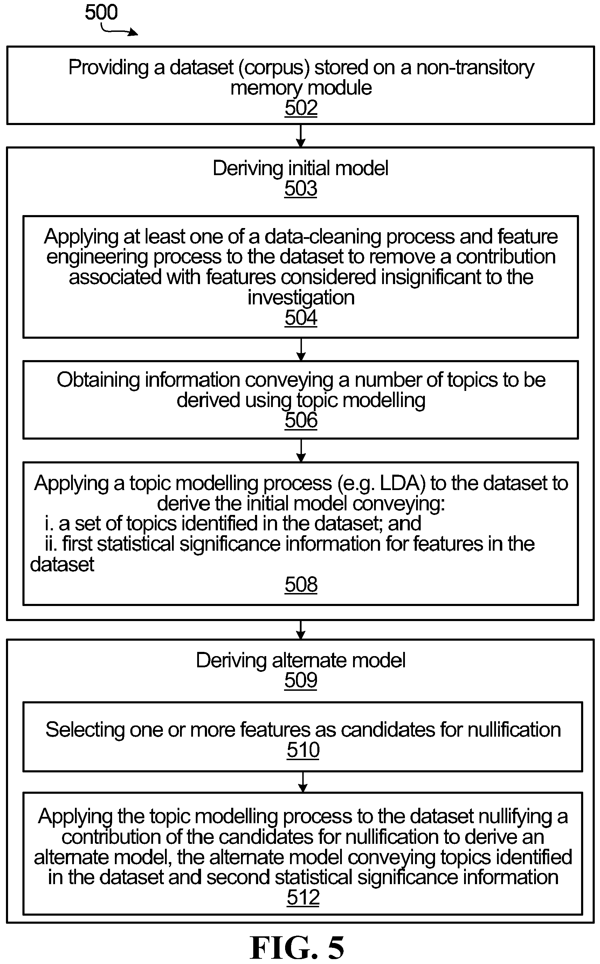

While the machine learning process implemented by the machine learning engine 410 to derive the initial and alternate models is not specifically limited to the use of topic modelling, such as for example Latent Dirichlet Allocation (LDA), the use of this type of process may present some interesting advantages in some practical implementations. For this reason, a specific implementation of the process describe in Figure 1 will be described in the context of a specific topic modelling implementation with reference to Figures 5 to 8.

Generally speaking, topic modeling is a type of statistical modeling for discovering abstract "topics" that occur in a collection of documents. In a very specific implementation, the topic modelling process is a Latent Dirichlet Allocation (LDA), which is an example of topic model used to classify terms (e.g. words) in a document to a particular topic. The LDA model ca be considered to construct a topics per document matrix and a terms per topic matrix modeled as Dirichlet distributions. Essentially, each document in the dataset can be considered to be reduced to a "bag of terms" and then LDA classifies each of these terms, within a document, to a particular topic. The general philosophy behind LDA is that if some terms appear frequently together in the corpus, it is likely because they are expressions of a same topic. The specific model generated by LDA is derived relying on certain specific assumptions namely:
i. LDA model supposes the existence of N topics in the corpus; and
ii. The presence of a term (e.g. word) in a document is a manifestation of a topic.

The model generated includes:
i. The definition of each topic, including information conveying statistical significance information pertaining to the terms (e.g. words) in each topic; and
ii. The topic composition of each document

It is noted that each topic is composed of a mixture of terms, specifically, that each topic is a convex combination of all the terms present in the corpus. In addition, each document is composed of a mixture of topics. LDA processes, and the mathematical models used in connection with such processes, are well known in the art of machine learning and as such will not be described in further detail here.

With reference to Figure 5, a method 500 for assisting a user in identifying in a dataset information meaningful to an investigation using a machine learning process implementing a topic modelling process (such as for example a Latent Dirichlet Allocation (LDA) in accordance with a specific example of implementation of the present invention will now be described. The method 500 depicted in Figure 5 may be implemented by a computer system including one or more processors in communication with a non-transitory memory module and with a display device.

At step 502, which is analogous to step 102 in Figure 1, a dataset stored on the non-transitory memory module is provided. The dataset constitutes a body of information based on which the investigation is to be performed. In this specific implementation, the dataset may be comprised of a plurality of documents forming a corpus of documents, wherein the documents are formed of terms, which constitute the features of the dataset (corpus).

At step 503, which is analogous to step 104 in Figure 1, the dataset is processed using a machine learning process (in those case a topic modelling process such as LDA) to derive an initial model conveying first statistical significance information corresponding to terms in the dataset (corpus).

As depicted, step 503 may include sub-step 504, sub-step 506 and sub-step 508.

Sub-step 504 is for applying a data-cleaning process and/or feature engineering process to the dataset, of the type describe previously, to remove a contribution associated with features considered insignificant to the investigation. The set of insignificant features may include, for example, a set of common stop terms and/or a set of investigation specific stop terms. As mentioned above, various approaches may be used at sub-step 504 including using a dictionary of common stop terms and/or investigation specific stop terms. In some specific implementations, sub-step 504 includes applying a process using a term frequency - inverse document frequency (TF-IDF) statistic to the dataset to identify at least some common stop terms and/or some of the investigation specific stop terms.

Sub-step 506 is for obtaining information conveying a number of topics to be derived from the dataset using the machine learning process. The number of topics to be derived may vary based on several factors including, for example, the nature of the information in the dataset, user preferences as well as other factors. The number of topics may range between 1 and 20; preferably between 1 and 10; more preferably between 5 and 9. In a specific practical implementation, 7 topics have been used. The number of topics to be derived may be a fixed or, alternatively, may be a programmable parameter of the system whereby a user (and/or an administrator) may provide this information during a configuration of the system. Once the number of topics to be derived is obtained, the process proceeds to step 508.

Alternatively, the number of topics at step 506 to be identified may be selected at least in part based on a user input. In such implementations, the user may be prompted through the user interface to provide a user input specifying the desired number of topics to be derived. The prompt may be in the form of a window including a set of user selectable options for the number of topics. In practical implementations of the method, the number of topics selected may be configured to lie within a certain specific range and the user may be presented with user selectable options in that range. In a specific implementation, the certain specific range is configured to be 9 or fewer topics, preferably between 5 and 9 and most preferably 7 topics. In response to the user selection of the number of topics to be derived, the process proceeds to step 508.

Alternatively, the number of topics at step 506 may be derived using an automated process, which may be trial-and-error based, aiming to satisfy certain criteria, configured for processing the dataset to derive a desirable number of topics. Any suitable method known in the art for selecting a number of topics to be derived in connection with a topic modelling process, such as LDA, may be used here. Once the number of topics to be derived is obtained using the automated process, the process proceeds to step 508.

At step 508, a topic modelling process, such as LDA, is applied to the dataset to derive the initial model which conveys:
i. a set of topics identified in the dataset (the number of topics in the set corresponding to the number of topics obtained at step 506); and
ii. first statistical significance information for features in the dataset, the first statistical significance information conveying a relevance of respective features(terms) in the dataset to each topic in the set of topics identified in the dataset.

The process then proceeds to step 509.

At step 509, which is analogous to step 106 described in figure 1, the dataset is processed using the same machine learning process as at step 503 in the order to derive an alternate model conveying second statistical significance information corresponding to features in the dataset. While the same machine learning process is used, the second statistical significance information is different from the first statistical significance information that was derived in connection with the initial model as a result of manipulations of some features in the dataset.

In particular, step 509 for deriving the alternate model conveying the second statistical significance information includes at step 510 of selecting a set of features in the dataset as candidates for nullification and then, at step 512, applying the machine learning process with the nullified set of features to derive the alternate model. The selection of the features as candidates for nullification at step 510 may be performed automatically (based on one or more specific criteria) and/or based on one or more user inputs and may be preformed in a manner similar to that described previously with reference to Figure 2. The contribution of the specific set of features may be nullified at step 512 using any suitable approach known in the art for nullifying the contribution of a term in connection with topic modelling processes. In some implementations, the set of features of the dataset whose contribution is nullified is selected at part of step 510 from the features of the dataset assigned a higher level of statistical significance relative to other features in the initial model (and thus potentially considered statistically more important features in the initial model) than other features in the dataset. In a very specific implementation, the contribution of a term is nullified by artificially replacing its number of occurrences to "0" for all the documents in the document-term matrix derived by LDA.

Following step 509 and once the initial and alternate models are obtained, the process proceeds to a step (not shown in the Figures) analogous to step 112 in which a user interface is rendered on a displace screen presenting information for assisting the user in identifying the information in the dataset meaningful to the investigation.

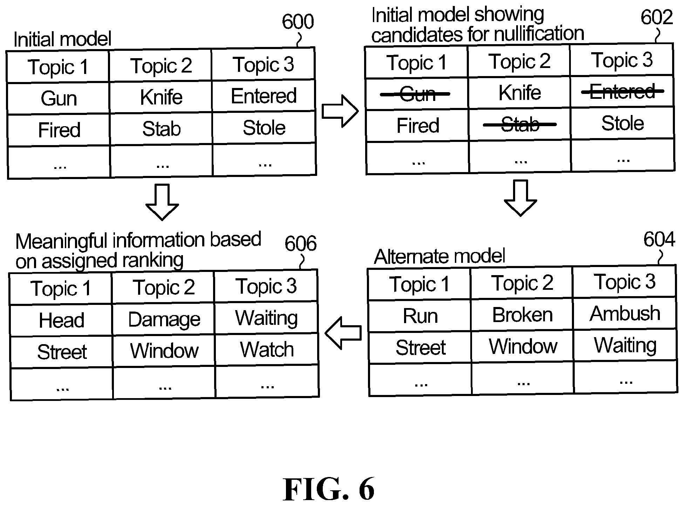

Fig. 6 is a schematic illustration of information that may be derived using the method of Figure 5 in accordance with a very specific example of implementation of the present invention including: (i) some terms of an initial model 600; (ii) the same terms of the initial model shown in 600 with showing candidates for nullification stricken-through 602; (iii) some terms of an alternate model 604; and (iv) information meaningful to an investigation 606 derived using some of the concepts described in the present disclosure. For the purpose of simplicity, statistical significance information has been omitted from Figure 6. More specifically, item 600 depicts three topics derived by applying a topic modelling process of the type described with reference to Figure 5, wherein for each topic there is a set of corresponding terms. For each topic, only two terms are shown and correspond to the terms ranked with the highest statistical significance for each one of the topics. Item 602 depicts the same set of three topics and the same terms as those of item 600 whereby certain terms, namely "Gun", "Stab" and "Entered" have been stricken through to indicate that these terms have been selected as candidates for nullification. Item 604 depicts three topics have been obtained by re-optimizing the initial model corresponding to item 600 with the terms "Gun", "Stab" and "Entered" nullified. It is to be appreciated that while the three topics of item 600 may correspond to the same concepts as the topics in item 604, however that need not necessarily be the case and the topic modeling process may have defined entirely different topics when generating the alternate model corresponding to item 604. Item 606 depicts information derived by performing a comparison between the initial model corresponding to item 600 and the alternate model corresponding to item 604. For example, the information presented by item 606 may identify a set of terms in the corpus presenting a greater change in statistical significance between the initial model corresponding to item 600 and the alternate model corresponding to item 604 relative to other terms in the corpus.

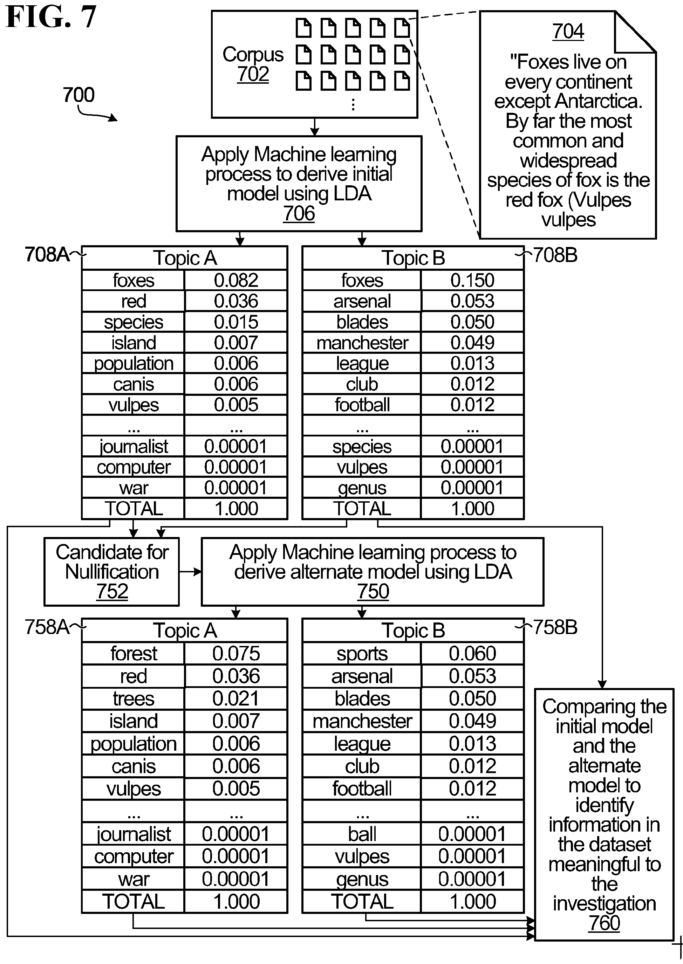

Fig. 7 is a schematic illustration 700 of portions of the method of Fig. 5, showing a process for processing a corpus to derive initial and alternate models using a topic modelling process, in particular a Latent Dirichlet Allocation (LDA) process, in accordance with a specific example of implementation of the present invention.

As shown, the process includes providing a dataset including a plurality of documents constituting a corpus 702 based on which the investigation is to be conducted. Each document is constituted of terms. Element 704 is presented to illustrate a portion of the content of one of the documents in the corpus 702. At step 706, which is analogous to step 104 in Figure 1, includes applying a machine learning process to the corpus 702. In this case the machine learning process is a topic modelling process, specifically a Latent Dirichlet Allocation (LDA) process configured for identifying two topics in the corpus 702. It is however to be appreciated that the LDA may be set to identify a different number of topics in alternate implementations. As depicted, step 706 releases an initial model comprised of two topics 708A and 708B, each of which is associated with a set of terms each with corresponding first statistical significance information conveying a relevance of the term to the topic. The initial model 708A and 708B is then provided to step 752, in which one or more candidates for nullification may be selected amongst the terms classified as statistically important based on the first statistical significance information according to the methods described in the present disclosure. For the purpose of illustration, it will be assumed that terms "foxes", "species" are selected as candidates for nullification at step 752. At step 750, the machine learning process (specifically in this example the Latent Dirichlet Allocation (LDA) process) is re-optimized while nullifying a contribution of the subset of features selected at step 752 to derive an alternate mode conveying second statistical significance information. As depicted, step 750 releases an alternate model comprised of two topics 758A and 758B, each of which is associated with a set of terms each with corresponding second statistical significance information conveying a relevance of the term to the topic.

At step 760, the initial model 708A and 708B and the alternate model 758A and 758B are compared to consider differences/variations between the first and second statistical significance information resulting from the nullification of the terms selected at step 752 in order to derive information that may be meaningful to the investigation but may have been obstructed by some of the more statistically significant terms in the dataset. For example, the information derived at step 760 may identify a set of terms in the dataset presenting a greater change in statistical significance between the initial model and the alternate model relative to other terms in the dataset. Step 760 may be implemented in a manner similar to what was discussed early with reference to step 306 (Figure 3). A user interface may then be rendered on a display device to convey the information derived at step 760.

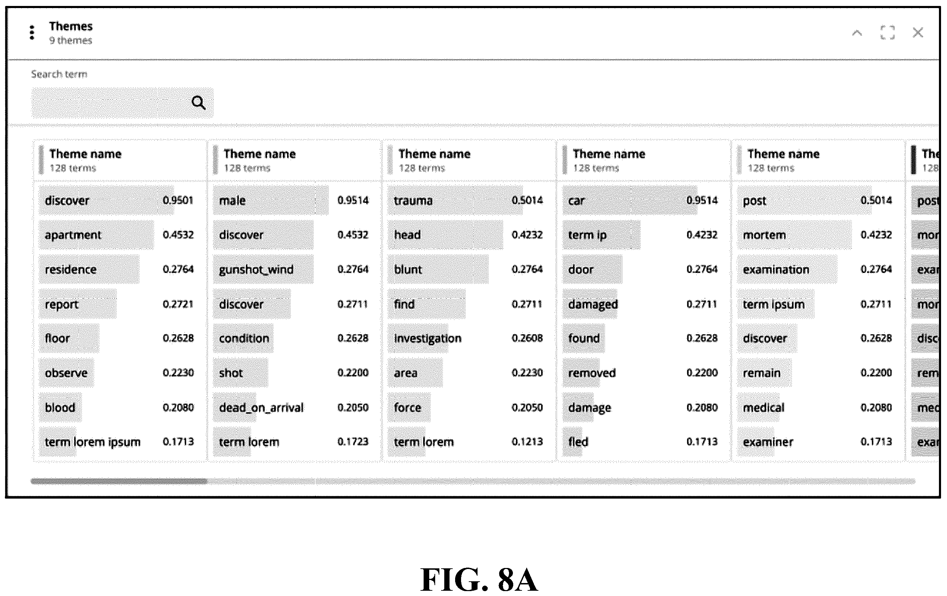

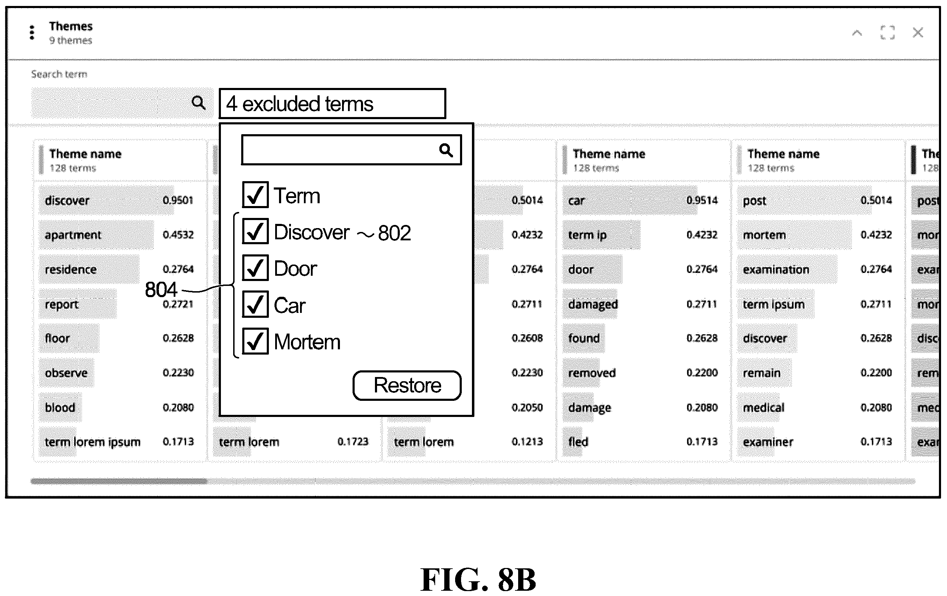

Fig. 8A and 8B are screen shots of a user interface that may be used in connection with the process of Figure 5 to depict a representation of an initial model. In this case the machine learning process is a topic modelling process, specifically a Latent Dirichlet Allocation (LDA) process configured for identifying 9 topics in the corpus. In Fig. 8A and 8B, the different topics have been referred to as "themes". More specifically, Figure 8A shows a visual representation of an initial model including a set of topics (or themes) along with a representation of statistical significance information for each term to topic. In the screen shot, five(5) themes can been seen (a sixth one is partially obstructed). In this representation, for each theme, the eight(8) most statistically significant terms are displayed along with their respective statistical significance ranking. It is to be appreciated that the values presented for conveying statistical significance have been shown for the purpose of illustration. Figure 8B shows the same representation of the initial model as that shown in Figure 8A with a drop-down menu 804 presenting a set of user selectable options 802 that the use may select from to specify the candidates for nullification.

It is to be appreciated that the screen shots shown in Fig. 8A and 8B have been shown only for the purpose of illustration and to facilitate the understanding of the person skilled in the art and that many possible alternatives may be contemplated in alternative implementations.

### Process for assisting a user - other embodiment

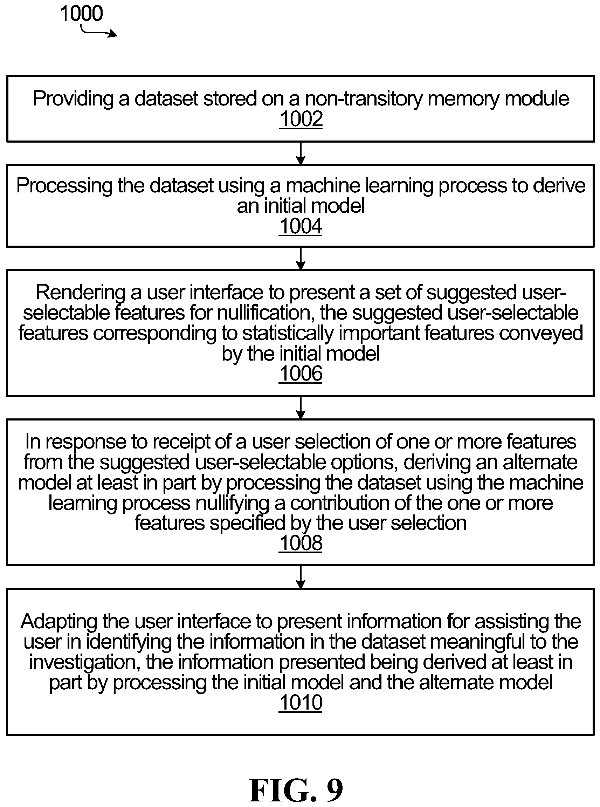

With reference to Figure 9, a method 1000 for assisting a user in identifying in a dataset information meaningful to an investigation using a machine learning process in accordance with another specific example of implementation of the present invention will now be described. The method shown in Figure 9 includes, *inter alia,* generating an initial model and then rendering a user interface presenting a set of statistically important features as suggested user-selectable features for nullification. In response to a user selection, an alternate model is generated by applying the machine learning process while the contribution of features selected by the user are nullified. The user interface is then adapted to present information derived by processing the initial model and the alternate model.

The method 1000 depicted in Figure 9 may be implemented by a computer system including one or more processors in communication with a non-transitory memory module and with a display device.

At step 1002, which is analogous to step 102 of Figure 1, a dataset stored on the non-transitory memory module is provided. The dataset constitutes a body of information based on which the investigation is to be performed. Step 1002 may be implemented in a manner similar to step 102 described with reference to Figure 1.

At step 1004, which is analogous to step 104 of Figure 1, the dataset is processed using a machine learning process to derive an initial model conveying first statistical significance information corresponding to features in the dataset. Different types of machine learning processes/algorithms may be used in different implementations in order to derive this initial model. Step 1004 may be implemented in a manner similar to step 104 described with reference to Figure 1.

At step 1006, a user interface is rendered on a display device to present a set of suggested user-selectable features for nullification, the suggested user-selectable features corresponding to statistically important features conveyed by the initial model derived at step 1004. The set of suggested user-selectable features may be derived in different manners, such as for example in a manner similar to what is described with reference to steps 2022 and 2024 (in path "A") in Figure 2.

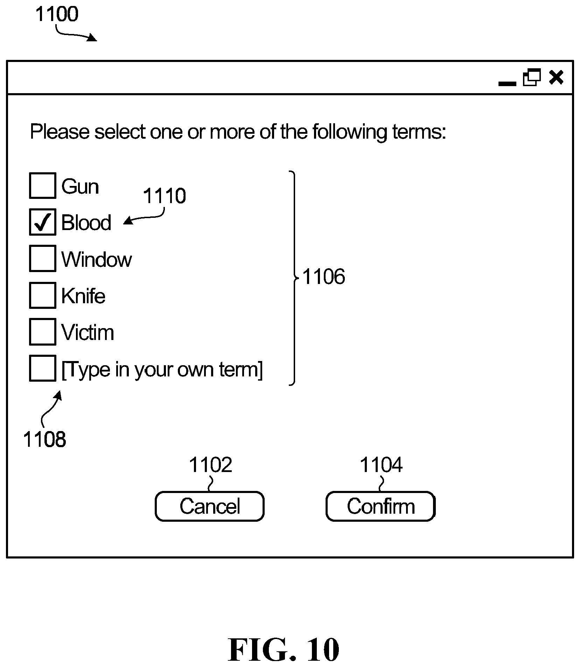

Fig. 10 is an example of a user interface window 1100 rendered on a display screen presenting a set of suggested user-selectable features 1106 for selection by the user in accordance with a specific example of implementation of the present invention. As shown, set of suggested user-selectable features 1106 is shown as a list of individually selectable features (in this implementation the features are terms), each feature being associated with a selection box which the user can select by providing a user input. As mentioned above, the terms in the list 1106 include terms considered to be statistically important in the initial model. In the specific example shown, the term "blood" 1110 has been selected by the user to be included as part of the terms to be nullified. In the example shown, one of the items in the list 1106 is a text box 1108 allowing a user to input a term not presented but which, nonetheless, the user wishes to nullify as part of the generation of the alternate model. The user interface window 1100 also includes a set of user control inputs for allowing a user to confirm a selection (user control 1104) or a user to cancel the selection process (user control 1102) and return to the generation of the initial model.

The process then proceeds to step 1008 in which, in response to receipt of a user selection of one or more features from the suggested user-selectable options, an alternate model is derived at least in part by processing the dataset using the machine learning process while nullifying a contribution of the one or more features specified by the user selection. Step 1008 may be implemented in a manner similar to step 110 described with reference to Figure 1.

Following completion of step 1008 and once the initial and alternate models are obtained, at step 1010, the user interface displayed on the display screen is adapted to present information for assisting the user in identifying the information in the dataset meaningful to the investigation. More specifically, at step 1010, the first statistical significance information and the second statistical significance information conveyed by the initial and alternate models are processed to derive the information to be presented on the user interface. The inventors have noted that by considering differences/variations between the first and second statistical significance information resulting from the manipulations of some features in the dataset (in this example by the nullification of the contribution of some features in the dataset), some insights into patterns and/or trends in the dataset can be obtained.

The information presented to the user may take different suitable forms in different implementations. Examples of different suitable forms in which the information may be presented were described in connection with step 112 (Figure 1) and similar approaches may be used at step 1008. For example, the information presented may identify a set of features in the dataset presenting a greater change in statistical significance between the initial model and the alternate model relative to other features in the dataset. Accordingly, the initial model and the alternate model may be compared to rank features in the dataset at least in part based on changes in statistical significance of the features between the initial model and the alternate model. Features assigned a ranking conveying a greater change in significance may be selected and presented to the user as part of the information in the dataset meaningful to the investigation.

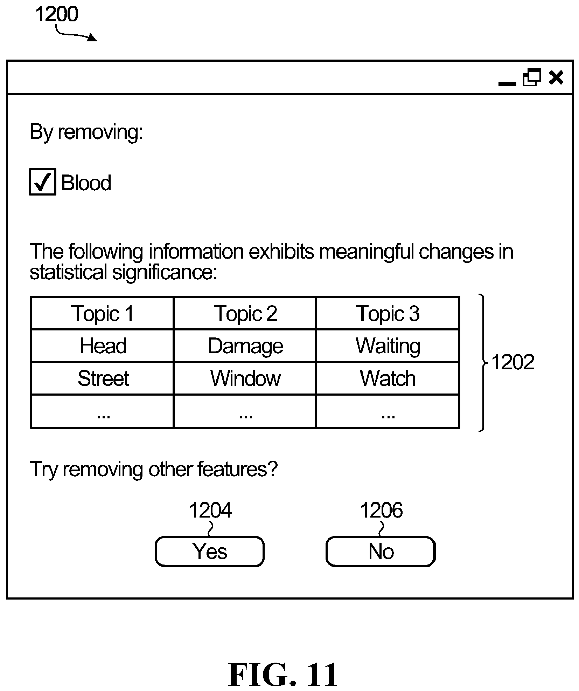

Fig. 11 is an example of a user interface window 1200 rendered on a display screen of a user device and presenting information 1202 that may be meaningful to an investigation derived in accordance with specific examples of implementation of the present invention. In this example, the machine learning process applied at steps 1004 and 1008 was a topic modelling process configured for generating a set of topics including 3 topics based on the dataset received at step 1002. In this example, the user interface 1200 displays the one or more terms selected by the user for nullification. In this case a single term "blood" was selected by the user through the interface shown in Figure 10 and therefore appears on the interface shown in Figure 11. The user interface 1200 also presents a set of topics 1202 including corresponding sets of features, wherein the features presented in the set of topics 1202 are those having undergone a greater change in significance between the initial model and the alternate model as a result of the nullification of the term "blood" relative to other terms in the dataset. In the present example the initial and alternate models are not displayed in the user interface window 1200 however in alternate implementations, the initial model, the alternate model or both may be displayed in a manner similar to the set of topics 1202. In the example depicted, the user interface window 1200 also presents a set of user control inputs for allowing a user to elect to remove other features (user control 1204) or to terminate the analysis (user control 1206). In the event the user elects to remove other features, by actuating user control 1204, the process reverts to step 1006 (Figure 9) and the user is presented with a user interface of the type shown in Figure 10 including the set of suggested user-selectable features 1106 for selection by the user.

It is to be appreciated that the examples described, and the configuration of the user interface in Figures 10 and 11 have been presented for the purpose of illustrating the concepts presented and to facilitate the understanding of the person skilled in the art. Actual practical implementations may vary significantly from these examples.

### Practical examples of implementation

Those skilled in the art should appreciate that in some non-limiting embodiments, all or part of the functionality previously described herein with respect to the processing system 404 depicted in Figure 4 and to the methods shown in Figures 1 to 3, 5, 7A, 7B, and 9 to 11 for assisting a user in identifying in a dataset information meaningful to an investigation, may be implemented as software consisting of a series of program instructions for execution by one or more computing units. The series of program instructions can be tangibly stored on one or more tangible computer readable storage media, or the instructions can be tangibly stored remotely but transmittable to the one or more computing unit via a modem or other interface device (e.g., a communications adapter) connected to a computer network over a transmission medium. The transmission medium may be either a tangible medium (e.g., optical or analog communications lines) or a medium implemented using wireless techniques (e.g., microwave, infrared or other transmission schemes).

Those skilled in the art should further appreciate that the program instructions may be written in a number of suitable programming languages for use with many computer architectures or operating systems.

In a non-limiting example, some or all the methods and processes described in the present disclosure may be implemented on a suitable computing system 1300, of the type depicted inFig. 12. Such a computing system 1300 typically includes a processing unit 1302 and a memory 1304 that is connected by a communication bus 1308. The memory 1304 includes program instructions 1306 and data, which includes dataset 1310. The processing unit 1302 is adapted to process the dataset 1310 according to the program instructions 1306 in order to implement the functionality described and depicted in the drawings with reference to the processing system 404 depicted in Figure 4 and to the methods shown in Figures 1 to 3, 5, 7A, 7B, and 9 to 11. The computing system 1300 may also comprise one or more interfaces for receiving or sending data elements from/to external modules. In particular, the computing system 1300 may comprise an interface 1316 for receiving user inputs and interface 1314 for exchanging signals with an output device (such as a display device).

The computing system 1300 may also include additional interfaces, such as a network I/O interface (not shown in the figures) for exchanging data over a private (or public) computer network to enable the computing system 1300 to communication with remote devices. Amongst others, this network I/O interface may enable the computing system 1300 to access remote device including, without being limited to, external storage devices storing additional datasets that may be useful in conducting an investigation and/or memory devices for storing results of the processing described in the present disclosure, such as for example the different models derived by applying the machine learning processes described in the present disclosure.

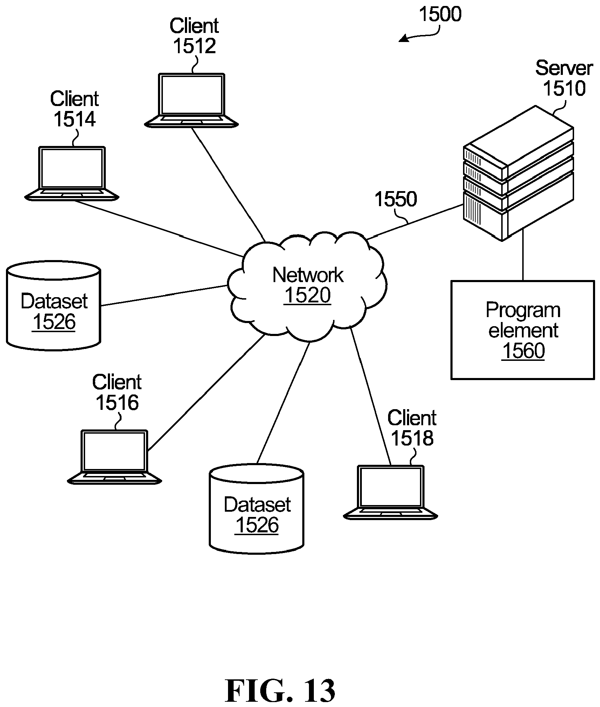

Figure 13 illustrates a network-based client-server system 1500 implementing a method for assisting a user in identifying in a dataset information meaningful to an investigation in accordance with an alternative embodiment. The client-server system 1500 includes a plurality of client systems 1512 1514 1516 1518 connected to a server system 1510 through network 1520. The communication links 1550 between the client systems 1512 1514 1516 1518 and the server system 1510 can be metallic conductors, optical fibers or wireless, without departing from the spirit of the invention. The network 1520 may be any suitable network including but not limited to a global public network such as the Intranet, a private network and a wireless network. The server 1510 may be adapted to access information using suitable methods known in the computer related arts in datasets stored in one or more memory devices 1526 1528, which are also interconnected through network 1520. The server 1510 executes program code 1560 implements methods described in the present document implementing machine learning processes for assisting a user in identifying in the datasets stored in the one or more memory devices 1526 1528 information meaningful to an investigation.

Note that titles or subtitles may be used throughout the present disclosure for convenience of a reader, but in no way these should limit the scope of the invention. Moreover, certain theories may be proposed and disclosed herein; however, in no way they, whether they are right or wrong, should limit the scope of the invention so long as the invention is practiced according to the present disclosure without regard for any particular theory or scheme of action.

All references cited throughout the specification are hereby incorporated by reference in their entirety for all purposes.

It will be understood by those of skill in the art that throughout the present specification, the term "a" used before a term encompasses embodiments containing one or more to what the term refers. It will also be understood by those of skill in the art that throughout the present specification, the term "comprising", which is synonymous with "including," "containing," or "characterized by," is inclusive or open-ended and does not exclude additional, un-recited elements or method steps.

Unless otherwise defined, all technical and scientific terms used herein have the same meaning as commonly understood by one of ordinary skill in the art to which this invention pertains. In the case of conflict, the present document, including definitions will control.

Although various embodiments of the disclosure have been described and illustrated, it will be apparent to those skilled in the art in light of the present description that numerous modifications and variations can be made. The scope of the invention is defined more particularly in the appended claims.

## Claims

1. A method for assisting a user in identifying in a dataset information meaningful to an investigation, said method being implemented by a computer system including one or more processors in communication with a memory module storing the dataset and with a display device, said method comprising:
a. using the one or more processors, processing the dataset using a machine learning process to derive an initial model conveying first statistical significance information corresponding to features in the dataset;
b. using the one or more processors, deriving an alternate model at least in part by processing the dataset using the machine learning process, wherein deriving the alternate model includes nullifying a contribution of a set of features in the dataset selected as candidates for nullification when applying the machine learning process, the set of features selected as candidates for nullification including a subset of the features in the dataset, wherein the alternate model conveys second statistical significance information corresponding to features in the dataset, wherein the first statistical significance information is different from the second statistical significance information;
c. rendering on the display device a user interface presenting information for assisting the user in identifying the information in the dataset meaningful to the investigation, the information presented being derived at least in part by processing information conveyed by the initial model and the alternate model.

2. A method as defined in claim 1, comprising selecting the candidates for nullification from the features in the dataset.

3. As method as defined in claim 1, comprising selecting the candidates for nullification from the features in the dataset is performed at least in part based on the first statistical significance information.

4. A method as defined in any one of claims 2 and 3, comprising:
a. classifying some features of the dataset as statistically significant at least in part by processing the first statistical significance information;
b. selecting the candidates for nullification from the features of the dataset classified as statistically significant.

5. A method as defined in claim 4, wherein selecting the candidates for nullification from the features in the dataset is performed at least in part based on inputs provided by the user to the computer system.

6. A method as defined in claim 5, comprising:
a. selecting the candidates for nullification from the features in the dataset at least in part by:
i. presenting on the user interface at least some features in the dataset as suggested user-selectable options for nullification; and
ii. in response to receipt of a user selection of one or more features from the suggested user-selectable options, including the user selection as part of the selected candidates for nullification;
b. deriving the alternate model at least in part by processing the dataset using the machine learning process, wherein deriving the alternate model includes nullifying the contribution of the selected candidates for nullification.

7. A method as defined in claim 6, comprising processing the first statistical significance information using an automated process to derive the at least some features in the dataset to be presented on the user interface as part of the suggested user-selectable options for nullification.

8. A method as defined in claim 7, wherein the automated process is configured to process the first statistical significance information to select at least one feature from the dataset to be presented on the user interface as part of the suggested user-selectable options for nullification.

9. A method as defined in claim 8, wherein the automated process is configured to process the first statistical significance information to select at least two features from the dataset to be presented on the user interface as part of the suggested user-selectable options for nullification.

10. A method as defined in any one of claims 8 and 9, wherein the automated process is configured to apply an optimization scheme to select the at least one feature from the dataset.

11. A method as defined in any one of claims 8 and 9, wherein the automated process is configured to apply a set of heuristics rules to select the at least one features from the dataset.

12. A method as defined in claim 2, comprising selecting the candidates for nullification from the dataset at least in part by processing the first statistical significance information using an automated process to select features to form part of the selected candidates for nullification.

13. A method as defined in any one of claims 1 to 12, wherein the information presented for assisting the user in identifying the information in the dataset meaningful to the investigation conveys:
i. a first set of features in the dataset classified as statistically significant based at in part on the first statistical significance information; and
ii. a second set of features in the dataset classified as statistically significant based at least in part on the second statistical significance information.

14. A method as defined in any one of claims 1 to 13, wherein the information presented for assisting the user in identifying the information in the dataset meaningful to the investigation identifies a specific subset of features in the dataset presenting a greater change in statistical significance between the initial model and the alternate model relative to other features in the dataset.

15. A method as defined in claim 14, comprising comparing the initial model and the alternate model to rank features in the dataset at least in part based on changes in statistical significance of the features between the initial model and the alternate model.

16. A method as defined in any one of claims 1 to 15, wherein the machine learning process includes a topic modelling process.

17. A method as defined in claim 16, wherein the machine learning process used to derive the initial model includes:
a. applying the topic modelling process to the dataset to derive information conveying:
i. a topic identified in the dataset; and
ii. the first statistical significance information for features in the dataset, the first statistical significance information conveying a relevance of respective features of the dataset to the topic identified in the dataset.

18. A method for assisting a user in identifying in a dataset information meaningful to an investigation, said method being implemented by a computer system including one of more processors in communication with a memory module storing the dataset and with a display device, said method comprising:
a. using the one or more processors, processing the dataset using a machine learning process to derive an initial model;
b. rendering a user interface on the display device to present a set of suggested user-selectable features for nullification, the suggested user-selectable features corresponding to statistically important features conveyed by the initial model;
c. in response to receipt of a user selection of one or more features from the suggested user-selectable options, deriving an alternate model at least in part by processing the dataset using the machine learning process nullifying a contribution of the one or more features specified by the user selection;
d. adapting the user interface to present information for assisting the user in identifying the information in the dataset meaningful to the investigation, the information presented being derived at least in part by processing the initial model and the alternate model.

19. A computer program product for assisting a user in identifying in a dataset information meaningful to an investigation, said computer program product including computer readable instructions stored on a non-transitory computer readable medium, said computer readable instructions when executed by a system including one or more processors being configured for implementing the method defined in any one of claims 1 to 18.
